# EUROPÄISCHE PATENTANMELDUNG

(11) **EP 0 738 557 A1**
(43) Veröffentlichungstag der Anmeldung: **23.10.1996**
(21) Anmeldenummer: 95120708.3
(22) Anmeldetag: 29.12.1995
(51) Int. Cl.: B23Q 1/03, B23Q 3/10

(54) **Auflagersystem für mit Kunststofffolie zu überziehende plattenförmige Werkstücke**

(30) Priorität: 09.01.1995 DE 19500400
(71) Anmelder: FB-Möbeltüren GmbH, 33334 Gütersloh (DE)
(72) Erfinder: Fortkord, Werner, D-33334 Gütersloh (DE)
(74) Vertreter: Patentanwälte Dipl.-Ing. Bodo Thielking Dipl.-Ing. Otto Elbertzhagen

(57) **Zusammenfassung**

Es handelt sich um ein Auflagersystem für plattenförmige Werkstücke, die von einer Seite her bis um die Schmalflächenseiten herum mit einer Kunststoffolie in einer Presse überzogen werden. Es besteht aus zumindest einer Steckplatte (1) mit einer Vielzahl von Stecklöchern (2) sowie aus dazugehörenden Auflagerstöpseln (7), die einen Steckzapfen (8) am Unterende sowie eine obere Auflagerstirnseite (11) haben. An einem Rüstplatz sind die Auflagerstöpsel (7) nach vorgegebenen Belegungsbildern in die Stecklöcher (2) der Steckplatte (1) mit Überstand ihrer Auflagerstirnseiten (11) über die Oberseite der Steckplatte (1) von oben her einsetzbar. Um die Steckplatte (1) maschinell umrüsten zu können, sind alle für eine Steckplatte benötigten Auflagerstöpsel (7) auf der betreffenden Steckplatte selbst verfügbar. Dazu ist jedem der Stecklöcher (2) ein benachbartes Aufnahmeloch (3) in der Steckplatte (1) zugeordnet, in welches jeweils ein mit dem zugeordneten Steckloch (2) austauschbarer Auflagerstöpsel (7) mit seiner Auflagerstirnseite (11) gegenüber seiner Anordnung im Steckloch (2) vertieft liegend von oben her einsetzbar ist.

## Beschreibung

Die Erfindung bezieht sich auf ein Auflagersystem für plattenförmige Werkstücke, wie Platten für Möbeltüren oder dergl., die von einer Seite her bis um die Schmalflächenseiten herum mit einer Kunststoffolie in einer Presse, wie einer Membranpresse, überzogen werden, bestehend aus einer Steckplatte mit einer Vielzahl von Stecklöchern sowie aus dazugehörenden Auflagerstöpseln, die einen Steckzapfen am Unterende sowie eine obere Auflagerstirnseite haben, wobei an einem Rüstplatz die Auflagerstöpsel nach vorgegebenen Belegungsbildern in die Stecklöcher der Steckplatte mit Überstand ihrer Auflagerstirnseiten über die Oberseite der Steckplatte von oben her einsetzbar sind.

Die Verwendung von Steckplatten mit in deren Stecklöcher einsetzbaren Auflagerstöpseln hat sich für Auflagersysteme der vorgenannten Art bewährt, damit auf einer solchen Steckplatte eine Mehrzahl von Werkstücken mit unterschiedlichen Formaten angeordnet werden kann. Wichtig ist, einerseits die Werkstücke ausreichend zu unterstützen, damit sie dem Preßdruck standhalten können und andererseits die Unterstützung der Werkstücke an deren Unterseiten von den Schmalflächenseiten etwas zurückspringen zu lassen, damit sich die aufzubringende Kunstofffolie bis um die Schmalflächenseiten der Werkstücke herumziehen kann.

Das Rüsten der Steckplatte eines solchen Auflagersystems ist entsprechend den Belegungsbildern für die auf einer Steckplatte anzuordnenden Werkstücke bislang von Hand vorgenommen worden. Am Rüstplatz hat man entsprechend die Auflagerstöpsel in die betreffenden Stecklöcher der Steckplatte eingewechselt, von dort entnommen oder zwischen den Stecklöchern umgesetzt, wobei immer nur so viele Auflagerstöpsel verwendet wurden, wie für eine komplette Belegung der Steckplatte notwendig waren. Das Ein- und Auswechseln der Auflagerstöpsel beim jeweiligen Umrüsten der Steckplatte ist selbst bei der Bedienung von Hand umständlich und für ein maschinelles Setzen der Auflagerstöpsel nicht geeignet.

Der Erfindung liegt deshalb die Aufgabe zugrunde, ein Auflagersystem der vorbeschriebenen Art sowie insbesondere die Steckplatte an eine maschinelle Umrüstung der jeweiligen Belegungsbilder anzupassen.

Diese Aufgabe wird nach der Erfindung dadurch gelöst, daß jedem der Stecklöcher ein benachbartes Aufnahmeloch in der Steckplatte zugeordnet ist, in welches jeweils ein mit dem zugeordneten Steckloch austauschbarer Auflagerstöpsel mit seiner Auflagerstirnseite gegenüber seiner Anordnung im Steckloch vertieft liegend von oben her einsetzbar ist.

Für die Erfindung ist wesentlich, daß alle für eine Steckplatte vorgesehenen Auflagerstöpsel auf der Steckplatte selbst verfügbar sind und jeweils zwei verschiedene Positionen einnehmen können. Die eine Position nimmt jeder Auflagerstöpsel ein, so wie er in das zugehörige Steckloch eingesetzt ist, womit seine Auflagerstirnseite den größtmöglichen Überstand über die Oberseite der Steckplatte hat. Die zweite Position ergibt sich, wenn der betreffende Auflagerstöpsel von dem Steckloch in das zugehörige Aufnahmeloch umgesetzt worden ist, dann ist die Auflagerstirnseite dieses Auflagerstöpsels gegenüber der Unterstützungsebene für die plattenförmigen Werkstücke abgesenkt. In zweckmäßger Ausführung nach der Erfindung nehmen die in die Aufnahmelöcher eingesetzten Auflagerstöpsel mit ihren Auflagerstirnseiten eine mit der Oberseite der Steckplatte flächenbündige Lage ein. Die Auflagerstöpsel sind dann also als Unterstützungselemente an den Belegungsstellen für die einzelnen auf der Steckplatte auszunehmenden Werkstücke aktiviert, wenn sie von der versenkten Anordnung im Aufnahmeloch in die angehobene Lage im zugeordneten Steckloch umgesetzt sind. Für eine optimale Belegung der Steckplatte werden die Belegungsbilder für die einzelnen Werkstücke in einem Rechner erstellt, von dem die Steuerbefehle für eine maschinelle Aktivierung oder Desaktivierung der einzelnen Auflagerstöpsel der gesamten Steckplatte abgerufen werden können.

Zur Erzielung zum einen der angehobenen und zum anderen der abgesenkten Position der Auflagerstöpsel können unterschiedliche Tiefen und/oder Konturen der Stecklöcher und der Aufnahmelöcher in der Steckplatte vorgesehen werden. Zweckmäßig ist es, den Aufnahmelöchern der Steckplatte eine im wesentlichen der Form der Auflagerstöpsel entsprechende, negative Hohlkontur zu geben. Insbesondere hierbei können die Auflagerstöpsel gestuft sein und einen im Durchmesser der Stecklöcher der Steckplatte entsprechenden Steckzapfen am Unterende sowie einen demgegenüber im Durchmesser größeren Kopf haben, dessen Oberseite die Auflagerstirnseite der Auflagerstöpsel bildet.

Für die maschinelle Umrüstung der Steckplatte ist es von Vorteil, wenn in einem vorgegebenen Koordinatensystem, wie einer X-Y-Ebene sowie einer dazu vertikalen Z-Komponente, sämtliche Auflagerstöpsel entlang gleicher Wege zwischen den Stecklöchern und den zugehörigen Aufnahmelöchern auf der Steckplatte zu verfahren sind. Dazu sind die Stecklöcher in geradliniger Längsrichtung (X-Richtung) und geradliniger Querrichtung (Y-Richtung) in der Steckplatte angeordnet und liegen die Aufnahmelöcher jeweils auf der Verbindungslinie zweier diagonal zueinander angeordneter Stecklöcher. Neben der für das Ausheben der Auflagerstöpsel aus den Steck- und den Aufnahmelöcher heraus bzw. das Absetzen darin erforderlichen Bewegung in Z-Richtung senkrecht zur X-Y-Ebene ist somit der Weg, den ein Auflagerstöpsel zwischen dem Steckloch und dem zugehörigen Aufnahmeloch bzw. umgekehrt zurückzulegen hat durch eine X- und eine Y-Verfahrkomponente definiert. Zweckmäßig sind die Abstände der Stecklöcher und somit auch die Abstände der Aufnahmelöcher in den Längs- und den Querreihen, also in X- und in Y-Richtung gleich, womit sich sowohl für die Stecklöcher als auch für die Aufnahmelöcher eine Verteilung nach einem quadratischen Raster auf der Steckplatte ergibt, wobei immer das Steckloch und das zugehörige Aufnahmeloch bezogen auf die quadratische Rasterung in diagonaler Richtung zueinander versetzt sind.

Das erfindungsgemäße Auflagersystem ermöglicht ein neues Rüstsystem, in dem am Rüstplatz eine Greifervorrichtung mit einer Mehr- oder Vielzahl von von oben her die Auflagerstöpsel von den Stecklöchern oder den Aufnahmelöchern der Steckplatte aufnehmenden und darin absetzenden Greifern angeordnet wird, die jeweils zwischen einem Steckloch und dem zugeordneten Aufnahmeloch verfahrbar sind. Dies geschieht vorteilhaft durch eine Dreiachsen-Programmsteuerung der Greifervorrichtung, wobei die Längsrichtung der Lochreihen der am Rüstplatz befindlichen Steckplatte als X-Achse, die dazu gehörende Querrichtung als Y-Achse und die aus der daraus gebildeten X-Y-Ebene senkrecht stehende Achse als Z-Achse definiert sind.

In besonderer Ausbildung weist die Greifervorrichtung eine den Rüstplatz überspannende Verfahrbrücke auf, die in Richtung der X-Achse oder der Y-Achse verfahrbar ist und sich quer zu der Verfahrrichtung erstreckt, wobei an der Verfahrbrücke die Greifer in zumindest einer Reihe im Abstand der Stecklöcher bzw. der Aufnahmelöcher in der betreffenden Y- oder X-Richtung angeordnet und zusammen mit dieser oder an der Verfahrbrücke um den jeweiligen Weg zwischen den Stecklöchern und den zugehörigen Aufnahmelöchern verfahrbar sind. Dazu ist die Verfahrbrücke auf Führungen eines Gestells mittels Supporten gelagert, an denen die Verfahrbrücke senkrecht zur Aufnahmeebene der Steckplatte am Rüstplatz an Vertikalführungen angeordnet ist, wobei die genannten Führungen die X- oder die Y-Richtung vorgeben und die Vertikalführungen die Z-Richtung. Die Greifer können an der Verfahrbrücke fest angeordnet sein, dann muß die Zustellung der Verfahrbrücke in der Z-Richtung auf die Höhenlage der Auflagerstöpsel abgestellt werden, die sich entweder in der angehobenen Lage in den Stecklöchern oder in der abgesenkten Lage in den Aufnahmelöchern befinden. In besonders zweckmäßiger Ausführung sind die Greifer der Greifervorrichtung einzeln steuerbare Elektro-Magnete, die jeweils für sich zu- oder abschaltbar sind, wobei die Auflagerstöpsel zumindest im Bereich ihrer Auflagerstirnseiten aus einem ferromagnetischen Werkstoff bestehen.

Das neue Auflagersystem läßt sich in einer Anlage zur automatischen Beschickung der zugehörigen Presse integrieren, in der beispielsweise eine oder mehrere der Steckplatten in einem Kreislauf geführt werden. Hierzu wird am Rüstplatz zur Auflagerung der jeweiligen Steckplatte ein Rollentisch vorgesehen, der mittels einer Fördervorrichtung mit der Presse verbunden ist.

Die Erfindung wird nachfolgend anhand der Zeichnung an einem Ausführungsbeispiel noch näher erläutert. Dabei zeigen:
- Fig. 1: die Draufsicht auf einen Eckabschnitt einer Steckplatte des vorbeschriebenen Auflagersystems,
- Fig. 2: einen Teilschnitt durch die Steckplatte nach Fig. 1 in Diagonalrichtung,
- Fig. 3: eine schematische perpektivische Eckansicht eines Rüstplatzes zur Bedienung einer Steckplatte gemäß Fig. 1 und
- Fig. 4: eine detailliertere Stirnansicht eines Rüstplatzes entsprechend Fig. 3.

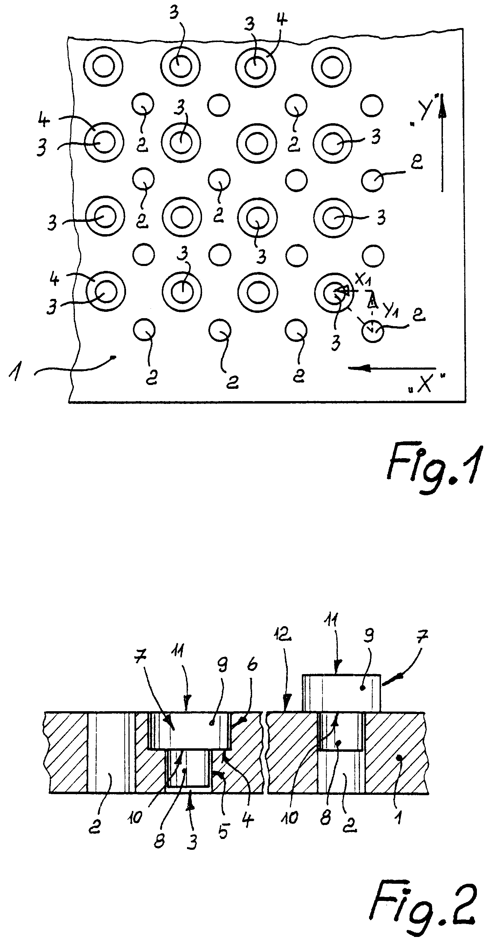

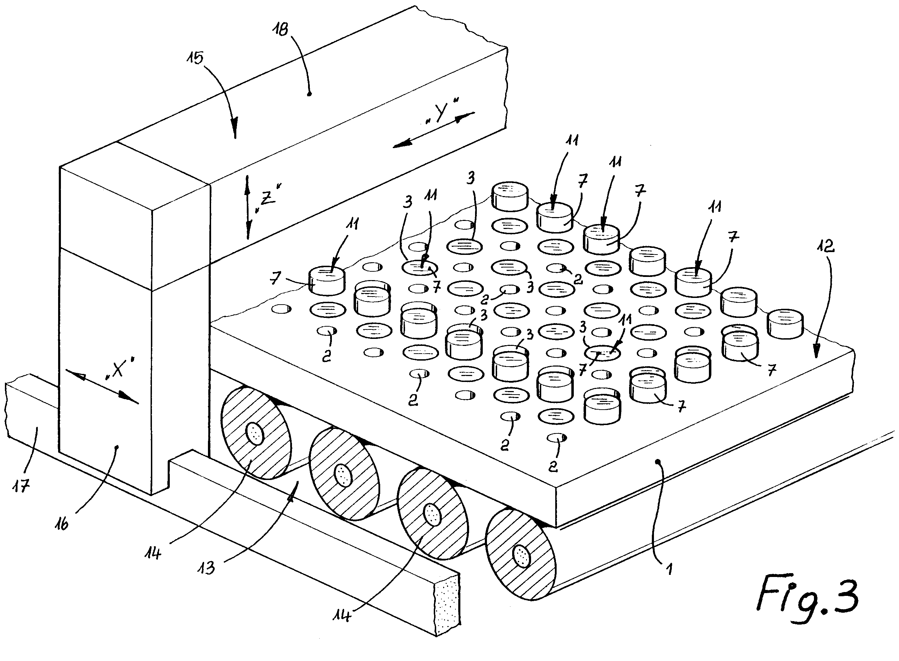

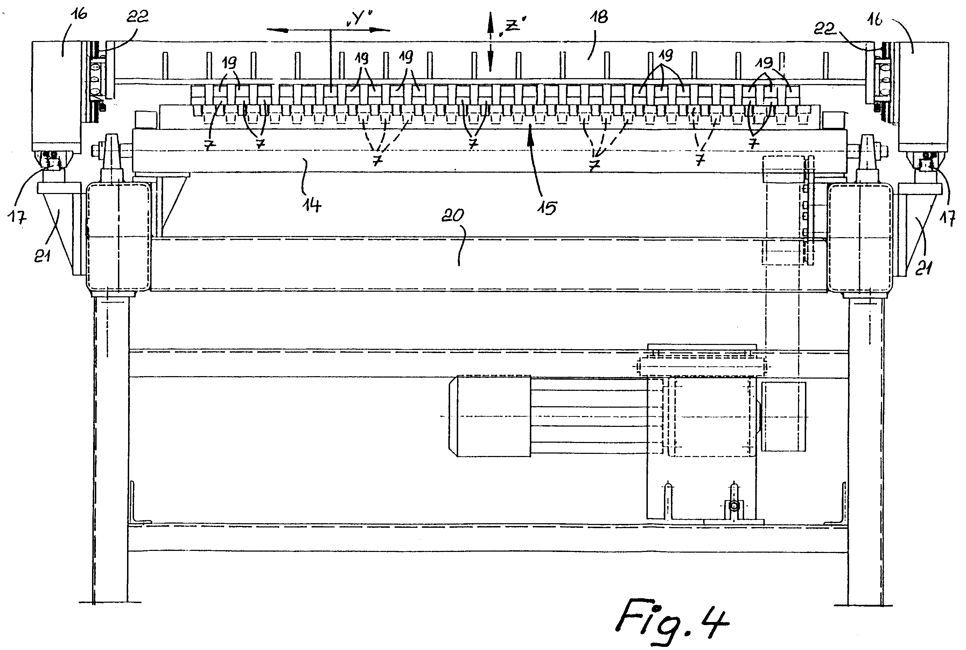

Figur 1 zeigt den Eckbereich einer Steckplatte 1, die in voller Größe ein rechteckiges Format hat. Die Längsrichtung dieser Platte ist mit dem mit "X" gekennzeichneten Pfeil und die Querrichtung mit dem mit "Y" gekennzeichneten Pfeil angegeben. Diese zueinander senkrechten Richtungen spannen eine X-Y-Ebene auf, die somit der Ebene der Steckplatte 1 entspricht.

In der X- und der Y-Richtung sind in die Steckplatte 1 Stecklöcher 2 eingearbeitet, die in beiden Richtungen gleiche Abstände haben und somit in einem quadratischen Raster angeordnet sind. In gleicher Weise sind in der Steckplatte Aufnahmelöcher 3 angeordnet, die jeweils auf den Verbindungsdiagonalen der Stecklöcher 2 liegen. Jedem der Stecklöcher 2 ist ein Aufnahmeloch 3 zugeordnet, welches gegenüber dem zugehörigen Steckloch 2 um die Komponente Y₁ und X₁ versetzt ist, wie das Figur 1 in der Ecke und X₁ versetzt ist, wie das Figur 1 in der Ecke rechts unten zeigt, wobei die Länge der beiden Komponenten Y₁ und X₁ jeweils dem halben Abstand der Stecklöcher 2 in der Y-Richtung und der X-Richtung entspricht. Somit sind auch die Aufnahmelöcher 3 in einem quadratischen Raster in der Steckplatte 1 angeordnet.

Wie man den Figuren 1 und 2 entnimmt, weisen die Aufnahmelöcher 3 einen Absatz 4 auf etwa halber Tiefe auf, es handelt sich dabei nämlich um Stufenbohrungen mit einem unteren im Durchmesser engeren Bohrungsabschnitt 5 und einem oberen im Durchmesser weiteren Bohrungsabschnitt 6. Die Aufnahmelöcher 3 entsprechen somit im wesentlichen in ihrer negativen Hohlkontur Auflagerstöpseln 7, die in den Aufnahmelöchern 3 versenkt angeordnet werden können.

Die Auflagerstöpsel 7 weisen an ihrem Unterende einen Steckzapfen 8 auf, dessen Durchmesser bis auf ein Spielmaß dem Durchmesser des verengten Bohrungsabschnittes 5 der Aufnahmelöcher 3 entspricht. Nach ob hin haben die Auflagerstöpsel 7 einen im Durchmesser breiteren Kopf 9, der in den oberen, erweiterten Bohrungsabschnitt 6 der Aufnahmelöcher 3 paßt. Zwischen dem Kopf 9 und dem Steckzapfen 8 der Auflagerstöpsel 7 besteht somit eine Schulter 10, mit der die Auflagerstöpsel 7 auf dem Absatz 4 in den Aufnahmelöchern 3 aufsitzen, sofern sie darin angeordnet sind. Die Oberseite der Köpfe 9 der Auflagerstöpsel 7 bildet eine Auflagerstirnseite 11, die eben ist, und in in die Aufnahmelöcher 3 eingesenkter Lage der Auflagerstöpsel 7 mit der Oberseite 12 der Steckplatte 1 bündig ist.

Jeder der Auflagerstöpsel 7 ist einem der Stecklöcher 2 sowie einem der Aufnahmelöcher 3 der Steckplatte 1 zugeordnet und zwischen diesen beiden Löchern 2, 3 austauschbar. Dabei nimmt jeder der Auflagerstöpsel 7, sofern er sich in dem Aufnahmeloch 3 befindet, die in Figur 2 ersichtliche abgesenkte Lage ein, während er in das zugehörige Steckloch 2 der Steckplatte 1 so einsetzbar ist, daß er mit der Schulter 10 am Übergang zwischen seinem Kopf 9 und dem Steckzapfen 8 auf der Oberseite 12 der Steckplatte 1 aufliegt. Diese zweite, angehobene Position der Auflagerstöpsel 7 ist in Figur 2 rechts dargestellt. Entsprechend haben die Stecklöcher 2 einen Durchmesser, der bis auf ein Spielmaß dem Durchmesser der Steckzapfen 8 am Unterende der Auflagerstöpsel 7 entspricht.

Um von dem Aufnahmeloch 3 in das zugehörige Steckloch 2 zu wechseln, muß der betreffende Auflagerstöpsel 7 senkrecht zu der X-Y-Ebene zunächst angehoben, dann um die in Figur 1 deutlich gemachten Wegstrecken X₁ und Y₁ verfahren und danach wieder abgesenkt werden. Wie Figur 3 dazu deutlich macht, wird dies maschinell über eine Greifervorrichtung 15 bewerkstelligt, die sich an einem Rüstplatz befindet. Der Rüstplatz ist über eine in der Zeichnung nicht dargestellte Fördervorrichtung mit der ebenfalls nicht wiedergegebenen Presse verbunden, in der plattenförmige Werkstücke von der Oberseite her mit einer Kunststoffolie überzogen werden, wobei diese Werkstücke auf den in angehobener Position befindlichen Auflagerstöpseln 7 aufgelagert werden, die nach vorgegebenen Belegungsbildern für die Gesamtfläche der Steckplatte 1 entsprechend dem Format der aufzulagernden Werkstücke in notwendiger Anzahl und Konfiguration von der eingesenkten Lage in den Aufnahmelöchern 3 in die angehobene Lage in den Stecklöchern 2 maschinell überführt werden. Dies geschieht am Rüstplatz, wo die betreffenden Steckplatten 1 auf einem Rollentisch 13 mit Förderrollen 14 angeordnet sind.

Die Greifervorrichtung 15 umfaßt eine Verfahrbrücke 18, die über seitliche Supporte 16 auf Geradführungen 17 angeordnet ist.

Im einzelnen erkennt man dazu in Figur 4, daß die Verfahrbrücke 18 auf einem Gestell 20 angeordnet ist, welches auch die Rollen 14 des Rollentisches 13 trägt. Seitlich sitzen an diesem Gestell 20 Konsolen 21, auf denen oberseitig die Geradführungen 17 montiert sind. Darauf ist die Verfahrbrücke 18 mit ihren Konsolen 16, wie in Figur 3 angedeutet in X-Richtung, verfahrbar, und entsprechend erstreckt sich die den Rüstplatz überspannende Verfahrbrücke 18 in der Y-Richtung. Die Konsolen 16 haben an ihren Innenseiten Vertikalführungen 22, an denen die Verfahrbrücke 18 senkrecht zur X-Y-Ebene, nämlich in der Z-Richtung, verfahrbar ist.

An der Unterseite der Verfahrbrücke 18 befindet sich eine Vielzahl von Greifern 19 in Gestalt von Elektromagneten, die je für sich durch Zu- oder Abschalten aktiviert oder desaktiviert werden können. Die Greifer 19 sind in einer oder in mehreren Reihen in Y-Richtung in einem Abstand angeordnet, der jeweils dem Abstand der Stecklöcher 2 bzw. dem Abstand der Aufnahmelöcher 3 auf der Steckplatte 1 in der Y-Richtung entspricht. Die Auflagerstöpsel 7 bestehen zumindest im Bereich ihrer oberen Auflagerstirnseiten 11 aus einem ferromagnetischen Werkstoff, wie Stahl, sie können deshalb bei aktivierten Greifern 19 aufgrund der Magnetkraft haften und bei abgeschalteten Greifern 19 von diesen losgelassen werden.

Die Greifer 19 können einzeln an der Verfahrbrücke 18 in Z-Richtung verfahrbar oder an der Verfahrbrücke 18 fest angeordnet sein, wobei sich der letztere Fall dann anbietet, wenn das Format der Magnet-Greifer 19 so klein dimensioniert ist, daß beim Absenken der Verfahrbrücke 18 die Greifer 19 entlang einer Reihe der Aufnahmelöcher 3 zwischen benachbart hochstehenden Auflagerstöpseln 7 in danebenliegenden Reihen der Stecklöcher 2 bis auf die vertieft liegenden Auflagerstirnseiten 11 der eingesenkten Auflagerstöpsel 7 abgesenkt werden können. Damit braucht die Verfahrbrücke 18 beim Überspannen einer Y-Reihe von Stecklöchern 2 lediglich bis auf das Niveau der hochliegenden Auflagerstirnseiten 11 der betreffenden Auflagerstöpsel 7 mit den Unterseiten ihrer Magnet-Greifer 19 abgesenkt zu werden, während bei Überdeckung einer Y-Reihe von Aufnahmelöchern 3 die Absenkung der Verfahrbrücke 18 in Z-Richtung soweit zu erfolgen hat, daß die Magnet-Greifer 19 mit ihren Unterseiten bis auf die dort vertieft liegenden Auflagerstirnseiten 11 der betreffenden Auflagerstöpsel 7 aufgefahren sind.

Das Einsetzen und Ausheben der Auflagerstöpsel 7 aus den Aufnahmelöchern 3 sowie den Stecklöchern 2 heraus bzw. in diese hinein erfolgt somit durch Zustellung der Verfahrbrücke 18 in der Z-Richtung, während das Verfahren der Auflagerstöpsel 7 in der von den Greifern 19 angehobenen, kollisionsfreien oberen Endlage in der X-Richtung durch Verstellen der Verfahrbrücke 18 in der X-Richtung um die Wegstrecke X₁ (Fig.1) entlang der geradlinigen Führungen 17 erfolgt. Für das Verschieben der aufgenommenen Auflagerstöpsel 7 in der Y-Richtung jeweils um die Wegstrecke Y₁ (Fig.1) sind die gesamten Greifer 19 als Einheit an der Verfahrbrücke 18 in Y-Richtung verstellbar, wozu grundsätzlich gleichermaßen auch die Verfahrbrücke 18 gegenüber den Supporten 16 in Y-Richtung verschieblich ausgebildet sein kann.

## Patentansprüche

1. Auflagersystem für plattenförmige Werkstücke, wie Platten für Möbeltüren oder dergl., die von einer Seite her bis um die Schmalflächenseiten herum mit einer Kunststofffolie in einer Presse, wie einer Membranpresse, überzogen werden, bestehend aus einer Steckplatte mit einer Vielzahl von Stecklöchern sowie aus dazugehörenden Auflagerstöpseln, die einen Steckzapfen am Unterende sowie eine obere Auflagerstirnseite haben, wobei an einem Rüstplatz die Auflagerstöpsel nach vorgegebenen Belegungsbildern in die Stecklöcher der Steckplatte mit Überstand ihrer Auflagerstirnseiten über die Oberseite der Steckplatte von oben her einsetzbar sind,
dadurch gekennzeichnet,
daß jedem der Stecklöcher (2) ein benachbartes Aufnahmeloch (3) in der Steckplatte (1) zugeordnet ist, in das jeweils ein mit dem zugeordneten Steckloch (2) austauschbarer Auflagerstöpsel (7) mit seiner Auflagerstirnseite (11) gegenüber seiner Anordnung im Steckloch (2) vertieft liegend von oben her einsetzbar ist.

2. Auflagersystem nach Anspruch 1,
dadurch gekennzeichnet,
daß die in die Aufnahmelöcher (3) eingesetzten Auflagerstöpsel (7) mit ihren Auflagerstirnseiten (11) mit der Oberseite (12) der Steckplatte (1) flächenbündig sind.

3. Auflagersystem nach Anspruch 2,
dadurch gekennzeichnet,
daß die Aufnahmelöcher (3) der Steckplatte (1) eine im wesentlichen der Form der Auflagerstöpsel (7) entsprechende, negative Hohlkontur haben.

4. Auflagersystem nach einem der Ansprüche 1 bis 3,
dadurch gekennzeichnet,
daß die Auflagerstöpsel (7) gestuft sind und einem im Durchmesser den Stecklöchern (2) der Steckplatte (1) entsprechenden Steckzapfen (8) am Unterende sowie einen demgegenüber im Durchmesser größeren Kopf (9) haben, dessen Oberseite die Auflagerstirnseite (11) der Auflagerstöpsel (7) bildet.

5. Auflagersystem nach einem der Ansprüche 1 bis 4,
dadurch gekennzeichnet,
daß die Stecklöcher (2) in geradlinigen Längs- und Querreihen in der Steckplatte (1) angeordnet sind und die Aufnahmelöcher (3) jeweils auf der Verbindungslinie zweier diagonal zueinander angeordneter Stecklöcher (2) liegen.

6. Auflagersystem nach Anspruch 5,
dadurch gekennzeichnet,
daß die Abstände der Stecklöcher (2) und somit die Abstände der Aufnahmelöcher (3) in den Längs- und Querreihen gleich sind.

7. Auflagersystem nach einem der Ansprüche 1 bis 6,
dadurch gekennzeichnet,
daß am Rüstplatz eine Greifervorrichtung (15) mit einer Mehr- oder Vielzahl von von oben her die Auflagerstöpsel (7) von den Stecklöchern (2) oder den Aufnahmelöchern (3) der Steckplatte (1) aufnehmenden und darin absetzenden Greifern (19) angeordnet ist, die jeweils zwischen einem Steckloch (2) und dem zugeordneten Aufnahmeloch (3) verfahrbar sind.

8. Auflagersystem nach Anspruch 7,
dadurch gekennzeichnet,
daß die Greifervorrichtung (15) eine den Rüstplatz überspannende Verfahrbrücke (18) aufweist, die in Richtung der Längsreihen oder Querreihen der Steck- und Aufnahmelöcher (2, 3) der Steckplatte (1) am Rüstplatz verfahrbar ist und sich quer zu den betreffenden Lochreihen erstreckt, wobei die Greifer (19) in zumindest einer Reihe im Abstand der Stecklöcher (2) bzw. der Aufnahmelöcher (3) in Richtung der betreffenden Lochreihen an der Verfahrbrücke (18) angeordnet und zusammen mit dieser oder daran in dieser Querreihenrichtung um den Weg zwischen den Stecklöchern (2) und den zugehörigen Aufnahmelöchern (3) verfahrbar sind.

9. Auflagersystem nach Anspruch 8,
dadurch gekennzeichnet,
daß die Verfahrbrücke (18) auf Führungen (17) eines Gestells (20) mittels Supporten (16) gelagert ist, an denen die Verfahrbrücke (18) senkrecht zur Aufnahmeebene der Steckplatte (1) am Rüstplatz an Vertikalführungen (22) angeordnet ist.

10. Auflagersystem nach Anspruch 9,
dadurch gekennzeichnet,
daß die Greifer (19) an der Verfahrbrücke (18) fest angeordnet sind und die Vertikalzustellung der Verfahrbrücke (18) in Abhängigkeit von der Höhenlage der Auflagerstirnsseiten (11) der von der Verfahrbrücke jeweils überspannten Auflagerstöpsel (7) gesteuert ist.

11. Auflagersystem nach einem der Ansprüche 7 bis 10,
dadurch gekennzeichnet,
daß die Auflagerstöpsel (7) aus einem ferromagnetischen Werkstoff zumindest an ihren Auflagerstirnseiten (11) bestehen und die Greifer (19) der Greifervorrichtung (15) einzeln steuerbare Magnete sind.

12. Auflagersystem nach einem der Ansprüche 7 bis 11,
dadurch gekennzeichnet,
daß am Rüstplatz zur Auflagerung der jeweiligen Steckplatte (1) ein Rollentisch (13) vorgesehen ist, der mittels einer Fördervorrichtung für eine oder mehrere Steckplatten (1) mit der Presse verbunden ist.

13. Verfahren zum Betrieb eines Auflager- und Rüstsystems nach einem der Ansprüche 7 bis 12,
dadurch gekennzeichnet,
daß die Längsrichtung der Steckplatte (1) sowie entsprechend die Richtung der in dieser Längsrichtung liegenden Reihen der Steck- und Aufnahmelöcher (2, 3) als X-Richtung, die dazu senkrechte Querrichtung als Y-Richtung und die zur daraus gebildeten X-Y-Ebene senkrechten Richtung als Z-Richtung einer Dreiachsen-Programmsteuerung für die Greifervorrichtung (15) definiert sind, wobei beim Austausch der Auflagerstöpsel (7) zwischen den betreffenden Stecklöchern (2) und den jeweils zugehörigen Aufnahmelöchern (3) die Greifer (19) um entsprechende Wegkomponenten in der Z-Richtung zum Aufnehmen und Absetzen der Auflagerstöpsel sowie in der X-Y-Ebene zwischen den zugehörigen Steck- und Aufnahmelöchern (2, 3) verfahren werden.
